# EUROPÄISCHE PATENTSCHRIFT

(11) **EP 2 004 424 B1**
(45) Veröffentlichungstag und Bekanntmachung des Hinweises auf die Patenterteilung: **16.05.2012**
(21) Anmeldenummer: 07722143.0
(22) Anmeldetag: 31.03.2007
(51) Int. Cl.: B60B 27/00, F16C 41/04, F16C 19/54, F16C 35/067, F16C 33/76, F16C 33/66, F16C 19/36

(54) **AUSWECHSELBARE RADLAGEREINHEIT, BEISPIELSWEISE FÜR NUTZKRAFTFAHRZEUGE,**
INTERCHANGEABLE WHEEL BEARING UNIT, FOR EXAMPLE FOR COMMERCIAL VEHICLES
ENSEMBLE ROULEMENTS DE ROUE REMPLAÇABLE, PAR EXEMPLE POUR DES VÉHICULES UTILITAIRES

(30) Priorität: 12.04.2006 DE 102006017162
(43) Veröffentlichungstag der Anmeldung: 24.12.2008
(73) Patentinhaber: Schaeffler Technologies AG & Co. KG, 91074 Herzogenaurach (DE)
(72) Erfinder: SCHÄFER, Marc-Andre, 97421 Schweinfurt (DE); HEUBERGER, Robert, 97422 Schweinfurt (DE); HENNEBERGER, Wolfram, 96117 Memmelsdorf (DE)
(86) Internationale Anmeldenummer: PCT/DE2007/000585
(87) Internationale Veröffentlichungsnummer: WO 2007/115539

(56) Entgegenhaltungen:
- WO-A-94/27055
- WO-A-2004/099637
- DE-A1- 19 833 436

## Beschreibung

### Gebiet der Erfindung

Die Erfindung betrifft eine auswechselbare Radlagereinheit, beispielsweise für Nutzkraftfahrzeuge, mit einer Radnabe und zwei Kegelrollenlagern, die jeweils einen Außenring und einen Innenring aufweisen, zwischen denen jeweils eine Reihe von Kegelrollen gelagert ist, und mit einem Sicherungsring in zumindest einem der Innenringe der beiden Kegelrollenlager. Weiterhin ergeben sich mit einem Verfahren zur Herstellung einer solchen auswechselbaren Radlagereinheit Vorteile.

### Hintergrund

Radlager und Radnaben sind bekanntermaßen hoch beanspruchte Teile für Radaufhängungen am Fahrwerk eines Kraftfahrzeuges, die besonders bei Nutzkraftfahrzeugen unterschiedlichsten Betriebsbeanspruchungen standhalten müssen. Dabei sind eine hohe Lebensdauer sowie ein wartungsfreier Einsatz der Radlager und Radnaben entscheidende Wettbewerbsvorteile für die Betreiber von solchen Nutzfahrzeugen.

Bei Radlagereinheiten für Nutzkraftfahrzeuge werden vorwiegend so genannte Insert-Kegelrollenlagereinheiten verwendet.

Aus der DE 198 33 436 A1 ist eine Nabeneinheit-Komplettlager bekannt, das ein zweireihiges Kegelrollenlager mit einem Innenring, Außenringen und dazwischen eine Vielzahl von durch einen Käfig gehaltenen Kegelrollen aufweist. Weiterhin sind beidseitig des Kegelrollenlagers ringförmige Dichtungen vorgesehen. Ein Innenring ist auf einem Teil des Außenumfangs der Nabe aufgebracht, ein zweiter Innenring ist durch einen Teil der Außenseite der Nabe gebildet.

Liegt nun ein Schaden am Lager einer so oder ähnlich aufgebauten Radlagereinheit vor, so wird derzeit die gesamte Radnabeneinheit ausgetauscht und verschrottet, obwohl die Radnabe selbst an sich noch brauchbar ist.

Selbst wenn die Montage einer derartigen Radlagereinheit z.B. in einer Werkstatt vorgenommen wird, umfasst diese gemäß dem Stand der Technik eine Vielzahl von Montageschritten, wie diese in den Fig. 1 - 9 beispielhaft und vereinfacht verdeutlicht sind, nämlich:
- Fig. 1: Reinigen der Radnabe 2,
- Fig. 2: Befetten der Innenring-Rollenkränze 6, 6',
- Fig. 3: Außenring 4 des ersten Kegelrollenlagers 1 in die Radnabe 2 einpressen,
- Fig. 4: Außenring 4' des zweiten Kegelrollenlagers 1' in die Radnabe 2 einpressen,
- Fig. 5: Aufsetzen der Radnabe 2 auf den Innenring 5 des zweiten Kegelrollenlagers 1',
- Fig. 6: Einführen des Innenringes 5 sowie des Kegelrollenkranz des ersten Kegelrollenlagers 1 in die Radnabe 2,
- Fig. 7: Sicherungsring 8 in die Radnabe 2 einschieben und an den beiden Innenringen 5, 5' verrasten,
- Fig. 8: Dichtung 12 des ersten Kegelrollenlagers 1 in die Radnabe 2 einsetzen, und
- Fig. 9: Dichtung 12' des zweiten Kegelrollenlagers 1 in die Radnabe 2 montieren.

Bei diesen Montageschritten muss das Radlager häufig gedreht bzw. gewendet werden. Weitere Nachteile sind, dass die Außenringen nicht fest mit einem Schmutzschutz bzw. mit den Dichtungen verbunden sind. Es sind weiterhin oft zwei verschiedene Dichtungen und zwei unterschiedliche Innenringe notwendig.

Die Befettung der Radlagereinheit erfolgt während der Montage, so dass hohe Ansprüche an die Sauberkeit während des Montageprozesses gestellt werden müssen.

Die DE 198 33 436 A1 betrifft weiterhin ein Verfahren zur Fertigung des genannten Nabeneinheit-Komplettlagers, das mit weniger Fertigungsschritten auskommt.

Dabei werden zunächst erste und zweite Rollenkäfig-Bauteilkomponenten hergestellt. Danach erfolgt das Einsetzen der ersten und zweiten Rollenkäfig-Bauteilkomponenten in den gemeinsamen Außenring. Anschließend wird die Nabe in die Baugruppe bestehend aus den ersten und zweiten Rollenkäfig-Bauteilkomponenten eingeschoben und dann der Innenring auf die Nabe montiert. Dieses Fertigungsverfahren ist relativ aufwendig zu bewerkstelligen, da zusätzlich zu den Rollenkäfig-Bauteilkomponenten der Außenring und der Innenring separat montiert werden müssen.

Wirtschaftlicher wäre es, insbesondere für den Betreiber des Nutzkraftfahrzeuges, die Radnabe beizubehalten und nur das defekte Radlager oder beide Radlager zu wechseln. Man geht aber davon aus, dass bei Insert-Radlagern mit Kegelrollenlagern die Reparaturwerkstätten die aufwendige und anspruchsvolle Demontage und Montage der Radlagereinheiten nicht zugemutet werden kann. Für die Montage der Radlagereinheit wären entsprechendes Know How, Spezialwerkzeuge und absolute Sauberkeit erforderlich, was in vielen Werkstätten meist nicht vorausgesetzt werden kann. Somit ist ein Tausch der kompletten Radnabeneinheit aufwendig und teuer.

Um eine auswechselbare Radlagereinheit, beispielsweise für Nutzkraftfahrzeuge, mit einer Radnabe und zwei Kegelrollenlagern, die jeweils einen Außenring und einen Innenring aufweisen, zwischen denen jeweils eine Reihe von Kegelrollen gelagert ist, und mit einem Sicherungsring in zumindest einem der Innenringe der Kegelrollenlager, ohne spezifische Fachkenntnisse und ohne Spezialwerkzeuge mit einfachen in den Reparaturwerkstätten vorhandenen Hilfswerkzeugen, ohne besondere Anforderungen an die Sauberkeit bei der Montage zu montieren, ist es aus der WO-A-2004/099637 bekannt, dass der jeweilige Außenring der beiden Kegelrollenlager eine koaxial zur Radnabenachse hin zur Lageraußenseite gerichtete zylindrische Verlängerung mit einer Dichtung aufweist, und dass an der der Dichtung gegenüberliegenden Seite des jeweiligen Kegelrollenlagers ein den Außenring axial fixierendes Halteelement angeordnet ist, das sich am zugehörigen Innenring abstützt, wodurch eine vormontierte Radlagereinheit selbsthaltend transportierbar und handhabbar ist.

Beide Elemente, d.h. Dichtung und Halteelement, können Halte-, d.h. das Zusammenhalten von Innen- und Außenring, und Schmutzschutzfunktion erfüllen.

Durch diesen Aufbau ist vorteilhaft eine vormontierte und im Ersatzteilgeschäft auf einfachere Weise auswechselbare Radlagereinheit beispielsweise für Nutzkraftfahrzeuge geschaffen. Die so vormontierte Radlagereinheit stellt eine abgedichtete und für eine lange Lebensdauer geschmierte Lagerung für eine Radnabe dar.

Das Haltelement, welches den Außenring axial fixiert und sich gleichzeitig am Innenring abstützt, ist so bemessen, dass ein Schmiermittel-Depot, vorzugsweise aus einem Schmierfett, gebildet wird, welches das Kegelrollenlager im Betrieb mit Schmierstoff versorgt. Hierzu bildet das Halteelement gemeinsam mit dem Außenring und dem Innenring einen Schmierstoff-Aufnahmeraum.

Nach der Erfindung, siehe kennzeichen des Anspruchs 1, dient die am jeweiligen Außenring der beiden Kegelrollenlager ausgebildete, koaxial zur Radnabenachse zur Lageraußenseite hin gerichtete zylindrische Verlängerung in vorteilhafter Weise jeweils als Sitz für die Dichtungen der Lager.

Um die Montage der einzelnen Kegelrollenlager mit einer einfachen ebenen Platte oder einem ähnlichen Bauteil ausführen zu können, ohne dass die auftretenden Montagekräfte auf die Kegelrollen einwirken und gegebenenfalls die Wälzlagerlaufbahnen am Innenring bzw. Außenring beschädigen, ist die Breite und axiale Länge des jeweiligen Außenringes so gewählt, dass die Montagekräfte nur auf den jeweiligen Außenring gerichtet werden. Dies wird nach einer weiteren Ausgestaltung der erfindungsgemäßen Radlagereinheit dadurch erreicht, dass die koaxial zur Radnabenachse hin zur Lageraußenseite gerichtete zylindrische Verlängerung des jeweiligen Außenringes gegenüber der Stirnseite des zugehörigen Innenringes geringfügig hinausragt, also axial länger ist als der zugeordnete Innenring.

Der Überstand der zylindrischen Verlängerung des jeweiligen Außenringes ist dabei so bemessen, dass dieser auch beim Einpressen des Außenringes in die Radnabe und der damit einhergehenden Einschnürung des Außenringes sowie dem daraus resultierenden axialen Versatz des Kegelrollenkontaktpunktes ausreichend groß ist. Damit wird gewährleistet, dass der zugeordnete Innenring nachgeführt werden kann und keine Montagekräfte auf die Kegelrollen gerichtet werden.

Vorzugsweise verwendet man ein nicht vom Schutzumfang erfaβten Verfahren zur Fertigung der auswechselbaren Radlagereinheit. Das Verfahren weist folgende Fertigungsschritte auf:
- Axiales Einpressen des ersten, als Baugruppe komplett vormontierten Kegelrollenlagers in die Radnabe,
- axiales Einpressen des zweiten, als Baugruppe komplett vormontierten Kegelrollenlagers in die Radnabe, und
- axiales Einschieben des Sicherungsringes in entsprechende Nuten mindestens eines der Innenringe eines der beiden Kegelrollenlager, insbesondere in entsprechende Nuten der beiden Innenringe der beiden Kegelrollenlager.

Demgemäß kann die Fertigung bzw. Montage der auswechselbaren Radlagereinheit in maximal drei Schritten erfolgen.

Gegebenenfalls kann der Schritt des axialen Einschiebens des Sicherungsringes in die entsprechenden Nuten beider Innenringe entfallen, wenn nach einer weiteren Ausgestaltung des erfindungsgemäßen Verfahrens der Sicherungsring bereits in einer entsprechenden Nut eines der Innenringe vormontiert ist, und dann beim axialen Einpressen des zweiten Kegelrollenlagers in die entsprechende Nut des anderen Innenringes einrastet.

Außerdem läßt sich, vorsehen, dass die beiden Kegelrollenlager aus axial entgegengesetzten Richtungen in die Radnabe eingeschoben werden.

Die so montierte Radlagereinheit ermöglicht eine einfachere Handhabung bei deren Montage und/oder Auswechslung beispielsweise in einer Nutzfahrzeug-Reparaturwerkstatt. Die Montage kann mit wenigen einfachen Einbauschritten vorgenommen werden. Des Weiteren sind an die Sauberkeit bei der Montage geringere Anforderungen zu stellen, da es sich bei der erfindungsgemäßen Baugruppe um eine vormontierte Einheit handelt, bei der die beiden Kegelrollenlager mit Innenring und Außenring und den übrigen zugehörigen Teile bereits komplettiert, befettet und vor Schmutz abgedichtet sind.

Darüber hinaus kann die erfindungsgemäße Radlagereinheit selbsthaltend transportiert und gehandhabt werden. Dies spart Montagezeit gegenüber einer Montage aller Einzelteile und Montagekosten gegenüber einem Kauf von Lager und Nabe, denn die Verwendung einer solchen vormontierten Baugruppe ist erheblich kostengünstiger als der Austausch der kompletten Nabeneinheit.

Weitere Vorteile ergeben sich auch aus der Vorfertigung und Vormontage der Kegelrollenlager selbst. Der Außenring des jeweiligen Kegelrollenlagers ist bereits vor seinem Einbau in die Radnabe fest mit der Dichtung verbunden und schützt das Innere des jeweiligen Kegelrollenlagers vor einer Verschmutzung. Für den Innenring und den Außenring können zudem baugleiche Dichtungen aus einer Bauserie verwendet werden. Ebenso können Innenring, Kegelrollen und Rollenkäfig aus einer Serienproduktion Anwendung finden.

### Kurze Beschreibung der Zeichnungen

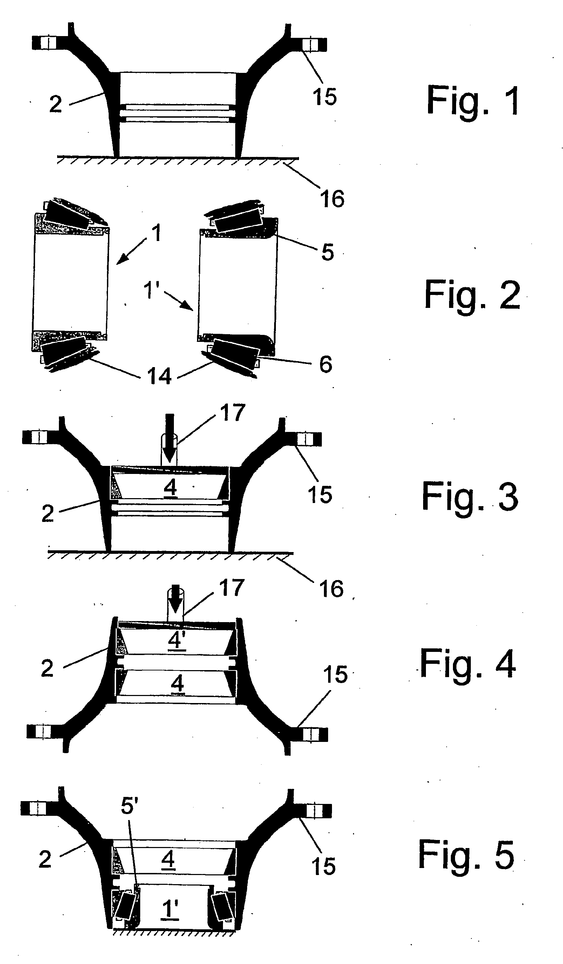

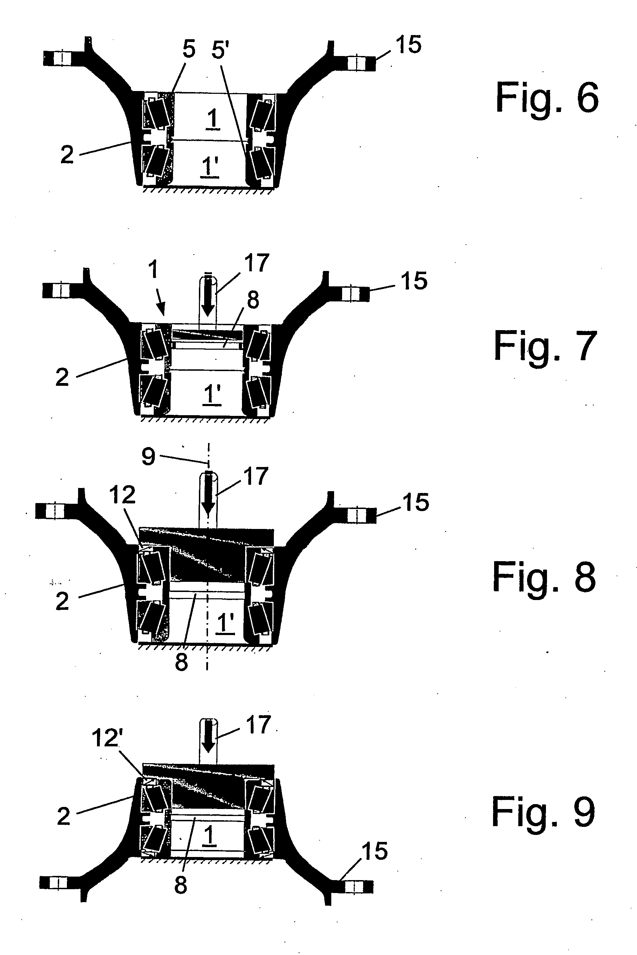

Zunächst zeigen die Figuren 1 bis 9 der beiliegenden Zeichnung eine Vielzahl von notwendigen Montageschritten bei der Fertigung einer Radlagereinheit gemäß dem eingangs geschilderten Stand der Technik.

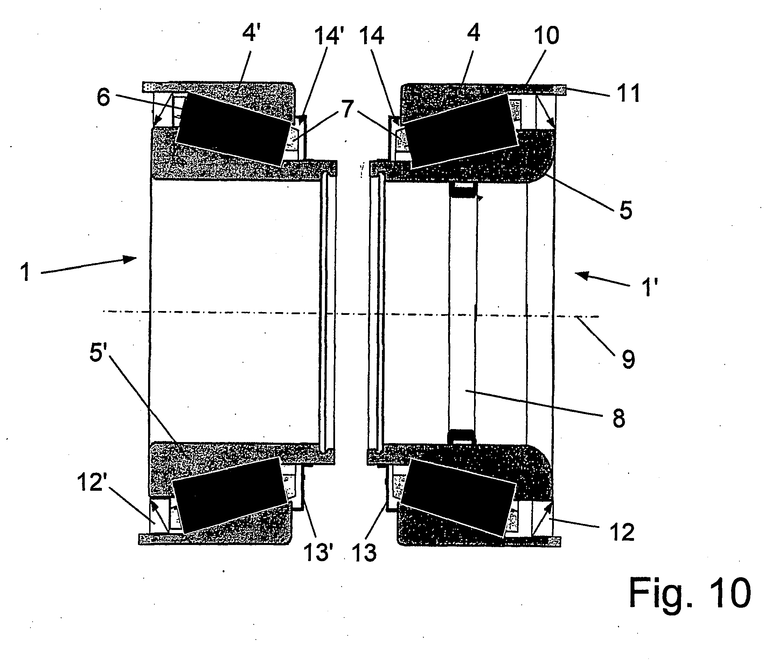

Die Erfindung wird im Folgenden anhand der Zeichnung an einer Ausführungsform näher erläutert. Hierbei zeigt
- Fig. 10: einen Querschnitt durch zwei in eine Radnabe einsetzbare Kegelrollenlagerbaugruppen für eine erfindungsgemäße auswechselbare Radlagereinheit,

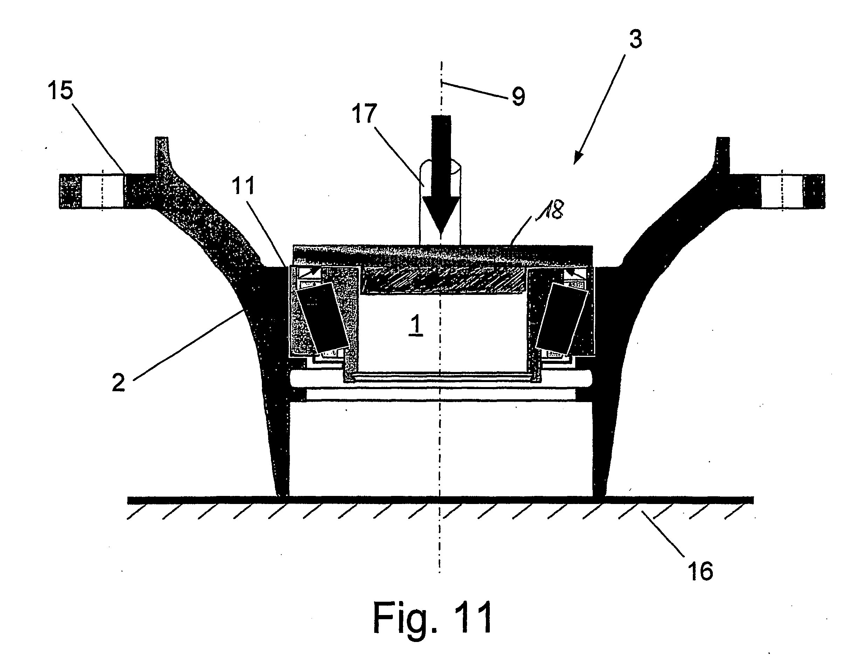

- Fig. 11: einen Einpressvorgang eines ersten Kegelrollenlagers gemäß Fig. 10 in die Radnabe,

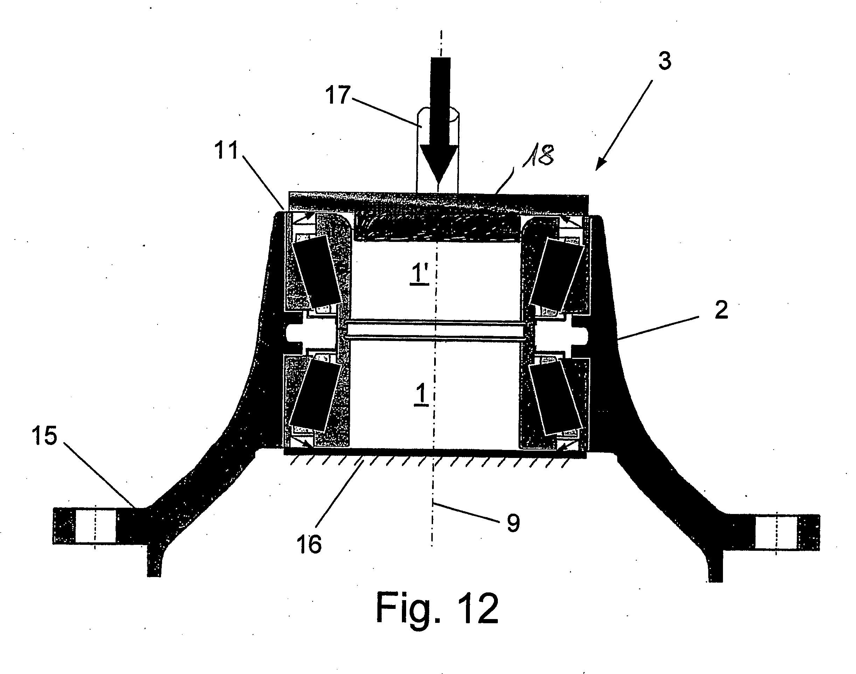

- Fig. 12: einen Einpressvorgang eines zweiten Kegelrollenlagers gemäß Fig. 10 in die Radnabe, und

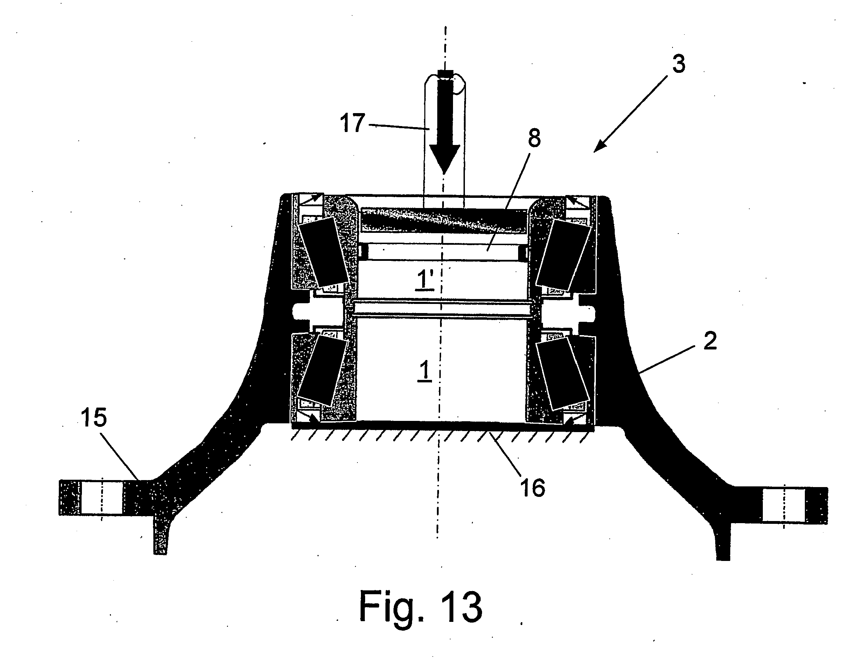

- Fig. 13: die Montagevorgang eines Sicherungsringes in der Radlagereinheit.

### Detaillierte Beschreibung der Zeichnungen

Die in Fig. 10 dargestellten beiden annähernd baugleichen, jedoch spiegelbildlich zueinander angeordneten Kegelrollenlager 1 und 1' werden letztlich in dieser Anordnung in eine in den Figuren 11 bis 13 gezeigte Radnabe 2 einer Radlagereinheit 3 montiert. Ein solches Kegelrollenlager 1, 1' besitzt einen Außenring 4, 4' und einen Innenring 5 bzw. 5', zwischen denen eine Reihe von Kegelrollen 6, 6' angeordnet sind. Diese Kegelrollen 6, 6' sind in einem Kegelrollenkäfig 7, 7' in an sich bekannter Weise geführt.

In dem Kegelrollenlager 1' gemäß Fig. 10 ist ein Sicherungsring 8 eingesetzt, der die beiden Innenringe 5, 5' der Kegelrollenlager 1, 1' nach deren Einbau in die Radnabe 2 und weiterer Axialverschiebung des Sicherungsringes 8 miteinander verbindet.

Der Außenring 4, 4' eines jeden dieser beiden Kegelrollenlager 1, 1' besitzt eine koaxial zur Lagerachse bzw. Radnabenachse 9 hin zur Lageraußenseite gerichtete zylindrische Verlängerung 10. Diese ragt in Form eines Überstandes 11 gegenüber der Stirnseite des zugehörigen Innenringes 5, 5' geringfügig hinaus. Dies hat zur Folge, dass bei der Montage des Kegelrollenlagers 1, 1' in die Radnabe 2, wie in den Figuren 11 bis 13 gezeigt, keine Montagekräfte auf die Kegelrollen 6 wirken, sondern diese alleine von den jeweiligen Außenringen 4, 4' aufgenommen werden.

Der Rückstand des Innenrings 5, 5' gegenüber des Außenringes 4, 4'kann auch durch das Montagewerkzeug berücksichtigt sein. Dadurch würde aber - wegen eines zusätzlichen Bearbeitungsschritts - das Montagewerkzeug teurer.

Zwischen die koaxial zur Lagerachse bzw. Radnabenachse 9 hin zur Lageraußenseite gerichtete zylindrische Verlängerung 10 des jeweiligen Außenringes 4, 4' und dem zugeordneten Innenring 5, 5' ist eine Dichtung 12, 12' eingesetzt. An der der Dichtung 12 bzw. 12' gegenüberliegenden Seite des Kegelrollenlagers 1, 1' ist weiterhin jeweils ein den Außenring 4, 4' axial fixierendes und im Querschnitt etwa Z-förmiges Halteelement 13, 13' angeordnet, das sich am Innenring 5 bzw. 5' abstützt. Dabei bildet das jeweilige Halteelement 13, 13' gemeinsam mit dem Außenring 4, 4' und dem Innenring 5, 5' jeweils Schmierstoff-Aufnahmeraum 14,14'.

Verfahrensgemäß wird bei der Fertigung der Radlagereinheit 3 gemäß Fig. 11 ein, wie vorstehend erläutert, als Baugruppe vormontiertes erstes Kegelrollenlager 1 axial in die Radnabe 2 eingepresst, die einen Radnabenflansch 15 aufweist. Dazu wird die Radnabe 2 mit ihrer dem Radnabenflansch 15 entgegengesetzten Seite auf einer ebenen Platte 16 aufgelegt, während ein Stempel 17 beispielsweise einer Werkzeugmaschine oder Presse über ein Werkzeug 18 mit Platte und Führungszapfen eine Druckkraft in Pfeilrichtung auf das erste Kegelrollenlager 1 gegen die Platte 16 ausübt.

In einem zweiten Montageschritt gemäß Fig. 12 wird die Radnabe 2 mit ihrer dem Radnabenflansch 15 nahen Seite auf die Platte 16 aufgelegt. Anschließend wird das zweite, als Baugruppe vormontierte Kegelrollenlager 1' axial in die Radnabe 2 eingepresst, wobei wiederum durch den Stempel 17 über das Werkzeug 18 eine Druckkraft in Pfeilrichtung auf das zweite Kegelrollenlager 1' ausgeübt wird. Damit sind die beiden Kegelrollenlager 1 und 1' komplett mit ihren Dichtungen 12 bzw. 12' in der Radnabe 2 der Radlagereinheit 3 fixiert.

Schließlich kann in einem dritten Fertigungsschritt das axiale Einschieben des Sicherungsringes 8 in entsprechende Nuten der Innenringe 5, 5' mittels des Stempels 17 einer geeigneten Maschine in Pfeilrichtung erfolgen, falls dies nicht schon bei der Montage des zweiten Kegelrollenlagers 1 erfolgt ist.

### Bezugszeichenliste

- 1: Kegelrollenlager
- 1': Kegelrollenlager
- 2: Radnabe
- 3: Radlagereinheit
- 4: Außenring
- 4': Außenring
- 5: Innenring
- 5': Innenring
- 6: Kegelrollen
- 6': Kegelrollen
- 7: Kegelrollenkäfig
- 7': Kegelrollenkäfig
- 8: Sicherungsring
- 9: Radnabenachse
- 10: zylindrische Verlängerung
- 11: Überstand
- 11': Überstand
- 12: Dichtung
- 12': Dichtung
- 13: Haltelement (mit Schmutzschutz/-funktion)
- 13': Haltelement (mit Schmutzschutz/-funktion)
- 14: Schmierstoff-Aufnahmeraum
- 14': Schmierstoff-Aufnahmeraum
- 15: Radnabenflansch
- 16: Platte
- 17: Stempel
- 18: Werkzeug mit Platte und Führungszapfen

## Patentansprüche

1. Auswechselbare Radlagereinheit (3), beispielsweise für Nutzkraftfahrzeuge, mit einer Radnabe (2) und zwei Kegelrollenlagern (1, 1'), die jeweils einen Außenring (4, 4') und einen Innenring (5, 5') aufweisen, zwischen denen jeweils eine Reihe von Kegelrollen (6) angeordnet ist, und mit einem Sicherungsring (8) in zumindest einem der Innenringe (5, 5') der Kegelrollenlager (1, 1'), wobei der jeweilige Außenring (4, 4') der beiden Kegelrollenlager (1, 1') eine koaxial zur Radnabenachse (9) hin zur Lageraußenseite gerichtete zylindrische Verlängerung (10) mit eneir Dichtung (12, 12') aufweist, und an der der Dichtung (12, 12') gegenüberliegenden Seite des jeweiligen Kegelrollenlagers (1, 1') ein den Außenring (4, 4') axial fixierendes Halteelement (13, 13') angeordnet ist, wobei sich das axial fixierende Halteelement (13, 13') am zugehörigen Innenring (5, 5') abstützt, wodurch die Radlagereinheit als vormontierte Einheit selbsthaltend transportierbar und handhabbar ist, **dadurch gekennzeichnet, dass** in die Verlängerung jeweils eine Dichtung (12, 12') eingesetzt ist derart, daβ die zylindrische Verlängerung (10) am jeweiligen Außenring (4, 4') als Dichtungssitz dient.

2. Auswechselbare Radlagereinheit nach Anspruch 1, **dadurch gekennzeichnet, dass** die koaxial zur Radnabenachse (9) hin zur Lageraußenseite gerichtete zylindrische Verlängerung (10) des jeweiligen Außenringes (4, 4') gegenüber der Stirnseite des zugehörigen Innenringes (5, 5') geringfügig länger ist.

3. Auswechselbare Radlagereinheit nach Anspruch 1 oder 2, **dadurch gekennzeichnet, dass** das Halteelement (13, 13') gemeinsam mit dem Außenring (4, 4') und dem Innenring (5, 5') einen Schmierstoff-Aufnahmeraum (14, 14') bildet.

4. Auswechselbare Radlagereinheit nach einem der vorhergehenden Ansprüche, **dadurch gekennzeichnet, dass** ein Sicherungsring (8) in einer Nut eines der Innenringe (5, 5') vormontierbar ist, und dazu vorgesehen ist beim axialen Einpressen des zweiten Kegelrollenlagers (1, 1') in die entsprechende Nut des anderen Innenringes (5, 5') einzurasten.

5. Auswechselbare Radlagereinheit nach Anspruch 1, **dadurch gekennzeichnet, dass** die Dichtung (12, 12') und das Halteelement (13, 13') dazu vorgesehen sind sowohl Innen - (5, 5') und Außenring (4, 4') zusammenzuhalten, als auch eine Schmutzschutzfunktion zu erfüllen.

## Claims

1. Interchangeable wheel bearing (3), for example for commercial vehicles, having a wheel hub (2) and two tapered roller bearings (1, 1') which have in each case an outer ring (4, 4') and an inner ring (5, 5'), between which in each case one row of tapered rollers (6) is arranged, and having a securing ring (8) in at least one of the inner rings (5, 5') of the tapered roller bearings (1, 1'), the respective outer ring (4, 4') of the two tapered roller bearings (1, 1') having a cylindrical extension (10) with a seal (12, 12') which is directed toward the bearing outer side coaxially with respect to the wheel hub axis (9), and a holding element (13, 13') which fixes the outer ring (4, 4') axially being arranged on that side of the respective tapered roller bearing (1, 1') which lies opposite the seal (12, 12'), the axially fixing holding element (13, 13') being supported on the respective inner ring (5, 5'), whereby the wheel bearing can be transported and handled in a self-locking manner as a preassembled unit, **characterized in that** in each case one seal (12, 12') is inserted into the extension, such that the cylindrical extension (10) serves as a seat for the seal on the respective outer ring (4, 4').

2. The interchangeable wheel bearing unit according to claim 1, **characterized in that** that cylindrical extension (10) of the respective outer ring (4, 4') which is directed toward the bearing outer side coaxially with respect to the wheel hub axis (9) is slightly longer than the end side of the associated inner ring (5, 5').

3. Interchangeable wheel bearing unit according to Claim 1 or 2, **characterized in that** the holding element (13, 13') forms a lubricant receptacle space (14, 14') together with the outer ring (4, 4') and the inner ring (5, 5').

4. Interchangeable wheel bearing unit according to one of the preceding claims, **characterized in that** a securing ring (8) can be preassembled in a corresponding groove of one of the inner rings (5, 5'), and is provided to latch into the corresponding groove of the other inner ring (5, 5') when the second tapered roller bearing (1, 1') is pressed in axially.

5. Interchangeable wheel bearing unit according to Claim 1, **characterized in that** the seal (12, 12') and the holding element (13, 13') are provided for holding together the inner (5, 5') and the outer ring (4,4') as well as for achieving a dirt protection function.

## Revendications

1. Module de palier de roue (3), remplaçable, par exemple pour des véhicules utilitaires comportant un moyeu (2) et deux paliers à rouleaux coniques (1, 1') ayant chacun une bague extérieure (4, 4') et une bague intérieure (5, 5') entre lesquelles il y a chaque fois une rangée de rouleaux coniques (6) ainsi qu'un anneau d'arrêt (8) dans au moins l'une des bagues intérieures (5, 5') des paliers à rouleaux coniques (1, 1'),
* la bague extérieure (4, 4') respective des deux paliers à rouleaux coniques (1, 1') ayant un prolongement cylindrique (10) coaxial à l'axe du moyeu de roue (9), dirigé vers le côté extérieur du palier, avec un joint (12, 12') et sur le côté du palier à rouleaux coniques (1, 1') opposé au joint (12, 12') il y a un élément de fixation (13, 13') fixant axialement la bague extérieure (4, 4'),
* l'élément de retenue (13, 13') assurant la fixation axiale en s'appuyant contre la bague intérieure (5, 5') correspondante de façon que le module de palier de roue puisse être transporté et manipulé de façon indépendante comme module pré-assemblé,
module **caractérisé en ce qu'**
un joint (12, 12') respectif est logé dans le prolongement de façon que le prolongement cylindrique (10) de la bague extérieure (4, 4') respective serve de siège de joint.

2. Module de palier de roue remplaçable selon la revendication 1,
**caractérisé en ce que**
le prolongement cylindrique (10) coaxial à l'axe de moyeu de roue (9) dirigé vers le côté extérieur du palier de la bague extérieure (4, 4') respective, dépasse légèrement la face frontale de la bague intérieure (5, 5') associée.

3. Module de palier de roue remplaçable selon la revendication 1 ou 2,
**caractérisé en ce que**
l'élément de retenue (13, 13') constitue une chambre de réception de lubrifiant (14, 14') avec la bague extérieure (4, 4') et la bague intérieure (5, 5').

4. Module de palier de roue remplaçable selon l'une des revendications précédentes,
**caractérisé par**
une bague d'arrêt (8) pré-assemblée dans une rainure de l'une des bagues intérieures (5, 5') est prévue pour que lors de l'enfoncement axial du second palier à rouleaux coniques (1, 1'), elle s'accroche dans la rainure correspondante de l'autre bague intérieure (5, 5').

5. Module de palier de roue remplaçable selon la revendication 1,
**caractérisé en ce que**
le joint (12, 12') et l'élément de retenue (13, 13') sont prévus pour maintenir réunies à la fois la bague intérieure (5, 5') et la bague extérieure (4, 4') et aussi pour assurer une fonction de protection contre la saleté.
